# FASCICULE DE BREVET EUROPEEN

(11) **EP 0 453 361 B1**
(45) Date de publication et mention de la délivrance du brevet: **19.01.1994**
(21) Numéro de dépôt: 91401015.2
(22) Date de dépôt: 17.04.1991
(51) Int. Cl.: B64G 1/62

(54) **Dispositif déployable notamment destiné au freinage des corps de rentrée de planétaire**
Entfaltbare Vorrichtung, insbesondere für Luftbremsen eines Weltraum-Rückkehrkörpers
Unfolding device, especially adapted to brake a reentry interplanetary vehicle

(30) Priorité: 19.04.1990 FR 9004998
(43) Date de publication de la demande: 23.10.1991
(73) Titulaire: DASSAULT-AVIATION, F-75008 Paris (FR)
(72) Inventeur: Puech, Jean-François, F-78124 Mareil-sur-Mauldre (FR)
(74) Mandataire: Colas, Jean-Pierre

(56) Documents cités:
- DE-A- 3 830 650
- US-A- 3 228 634
- US-A- 3 604 667
- US-A- 4 896 847

## Description

La présente invention concerne un dispositif déployable comportant des éléments reliés à un support par des articulations situées dans un plan et dont les axes forment dans ce plan un polygone convexe, et capables de passer d'une position de pliage, où lesdits éléments font un premier angle avec ledit plan, à une position de déploiement, où les éléments font un angle plus faible avec ledit plan et constituent ensemble une surface sensiblement continue.

L'invention vise à fournir un dispositif formant une surface continue, de grandes dimensions, capable de résister sans modification à des efforts de pression dus à un écoulement d'origine aérodynamique ou autre, dans une position déployée, et pouvant être replié et stocké dans un volume de diamètre réduit.

Un tel dispositif trouve son application notamment dans le domaine spatial, sur les corps de rentrée planétaire où l'ensemble des instruments de mesure doit être stocké au lancement dans un volume réduit (par exemple la coiffe du lanceur), et lors de sa pénétration dans l'atmosphère, offrir une surface aérodynamique continue de manière à non seulement freiner cette rentrée, mais aussi constituer un écran aux élévations de température auxquelles seraient exposés lesdits instruments au contact de l'atmosphère.

L'application d'un dispositif selon l'invention dans un tel domaine doit permettre de réaliser des sondes de grandes dimensions à l'état déployé mais occupant un volume restreint lors du lancement.

Des dispositifs déployables du type indiqué au début sont connus par le principe même de fonctionnement du parapluie, passant d'une position de fermeture repliée, à une position d'ouverture déployée, l'opération d'ouverture ou de fermeture étant effectuée par une action sur des baleines, articulées autour d'un axe pour former à leur base un polygone de sustentation et entre lesquelles sont susceptibles d'être tendus des pans d'un panneau de tissu initialement à peu près circulaire, et formé en dôme par la cambrure des baleines.

On peut rattacher à ce type de dispositifs ceux des brevets US-A-3 228 634, et US-A-4 896 847.

D'autres types de dispositifs déployables sont également connus dans l'industrie de l'emballage où, pour des commodités de stockage, on met en oeuvre des systèmes de pliage et de conformation permettant, par exemple, d'obtenir un récipient en carton, à partir d'un élément plat.

Cependant, les parapluies, à l'état déployé, ne fournissent pas une surface de forme stable lorsqu'ils sont soumis à un écoulement aérodynamique intense. Les emballages connus en carton, pour leur part, ne sont pas connus pour coopérer avec un dispositif d'entraînement susceptible de les maintenir contre un écoulement aérodynamique.

La présente invention a pour but de fournir un dispositif du type indiqué au début, qui garde une forme stable sous l'effet d'un écoulement aérodynamique même intense, et qui soit en même temps simple et léger.

A cet effet, elle fournit un dispositif déployable comprenant un support et des éléments capables de pivoter autour d'axes fixes par rapport à ce support, ces axes constituant un polygone convexe dans un plan, et les éléments étant capables de pivoter ensemble autour desdits axes pour faire passer le dispositif d'une disposition de pliage, où les éléments font un premier angle avec ledit plan, à une disposition de déploiement, où les éléments font avec ledit plan un second angle plus faible que le premier et constituent ensemble une surface à peu près continue, qui présente pour particularité que lesdits éléments comprennent des premiers panneaux rigides, liés chacun au support de façon à pouvoir pivoter d'un premier angle autour d'un premier axe qui constitue un premier côté dudit polygone, et des seconds panneaux, rigides, en nombre égal aux premiers panneaux et intercalés entre eux, liés chacun au support de façon à pouvoir pivoter d'un second angle, plus petit que le premier, autour d'un second axe qui constitue un second côté dudit polygone, et des panneaux de liaison, rigides, sont placés chacun entre un premier et un second panneau et reliés à ce premier panneau par une articulation d'axe perpendiculaire au premier axe, et à ce second panneau par une articulation d'axe perpendiculaire au second axe.

Le dispositif doit répondre à certaines spécifications en position déployée où la structure doit assurer la tenue aux efforts de pression et la stabilité de l'ensemble des éléments qui la constitue. L'ensemble doit fournir une surface aérodynamique de bonne qualité géométrique. Les fonctions des différents éléments ne doivent pas altérer de façon notable les qualités aérodynamiques par des jeux, désalignements ou déformations non maîtrisés.

En position repliée, l'ensemble doit permettre le stockage dans un volume de diamètre minimum, et l'ensemble doit être rigide afin d'assurer une bonne résistance aux vibrations.

Les liaisons entre les différents éléments doivent permettre de garantir l'intégrité du système et assurer une fiabilité de fonctionnement satisfaisante.

Diverses modalités, exposées ci-après, permettent de répondre au mieux à ces diverses spécifications.

Ces modalités ressortiront de la description qui suit de raisonnements théoriques et d'exemples pratiques, illustrés avec les dessins, parmi lesquels :

Figure 1 est une vue en plan partielle de la construction géométrique d'un dispositif de déploiement selon l'invention montrant la définition des secteurs constitutifs.

Figure 2 est une vue en perspective du dispositif de la figure 1 montrant à la fois le dispositif en plan et en position repliée, montrant la définition du volume.

Figures 3 et 4 représentent respectivement en position repliée et déployée un autre dispositif selon l'invention, vu en perspective.

Figure 5 est une vue schématique, en coupe radiale partielle, d'un dispositif des figures 3 et 4, montrant la position des panneaux en position de pliage et de déploiement.

Figures 6 et 7 sont des vues de détail montrant en coupe l'articulation d'un panneau de liaison avec respectivement un panneau principal et avec un bras.

Figure 8 est une vue en coupe d'un bras et de sa tringlerie de commande.

Le dispositif déployable désigné par 1 dans son ensemble sur les figures trouve notamment son application dans le domaine spatial, sur les corps de rentrée planétaire. Il peut être considéré comme formé d'une pluralité de secteurs S articulés de manière à être mobiles par rapport à un support 2 auquel ils sont reliés par des articulations et aptes à passer d'une position de pliage où lesdits secteurs S font, dans leur ensemble, un premier angle avec le plan du support 2, à une position de déploiement, où les secteurs S font un angle plus faible avec ledit plan pour constituer ensemble une surface externe de révolution continue.

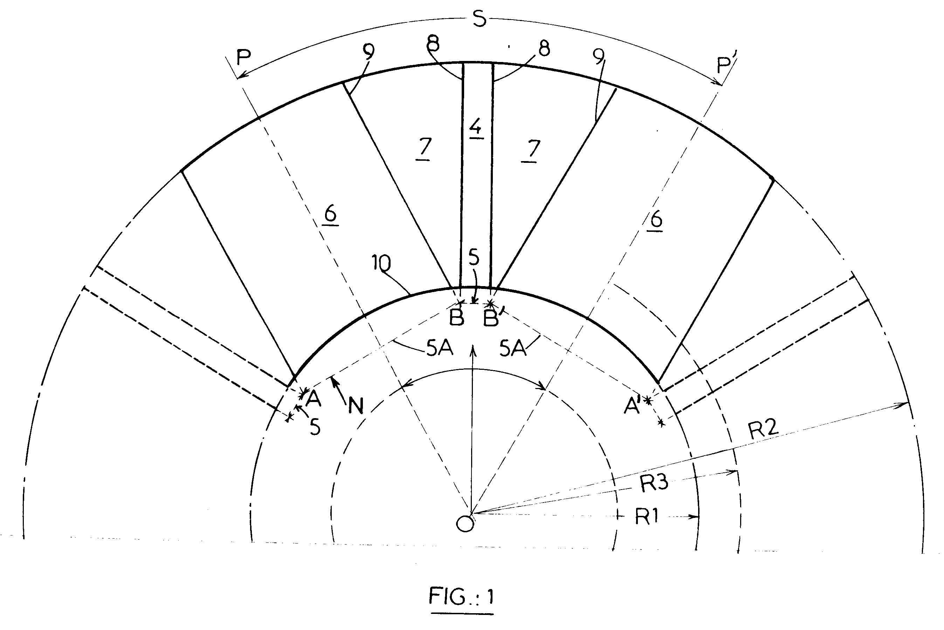

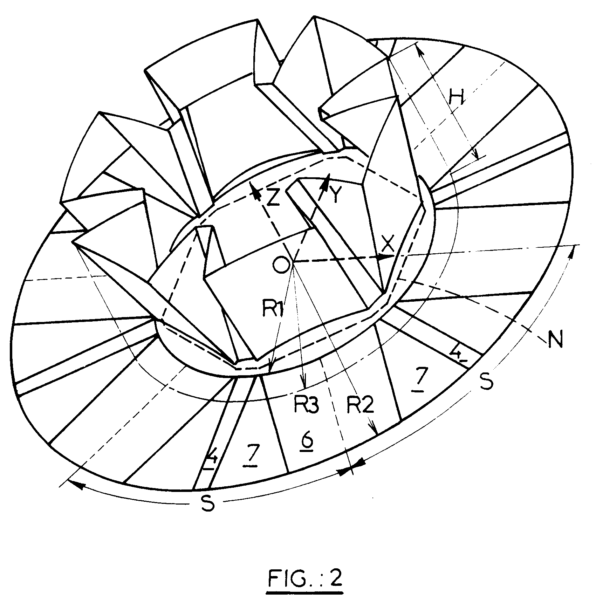

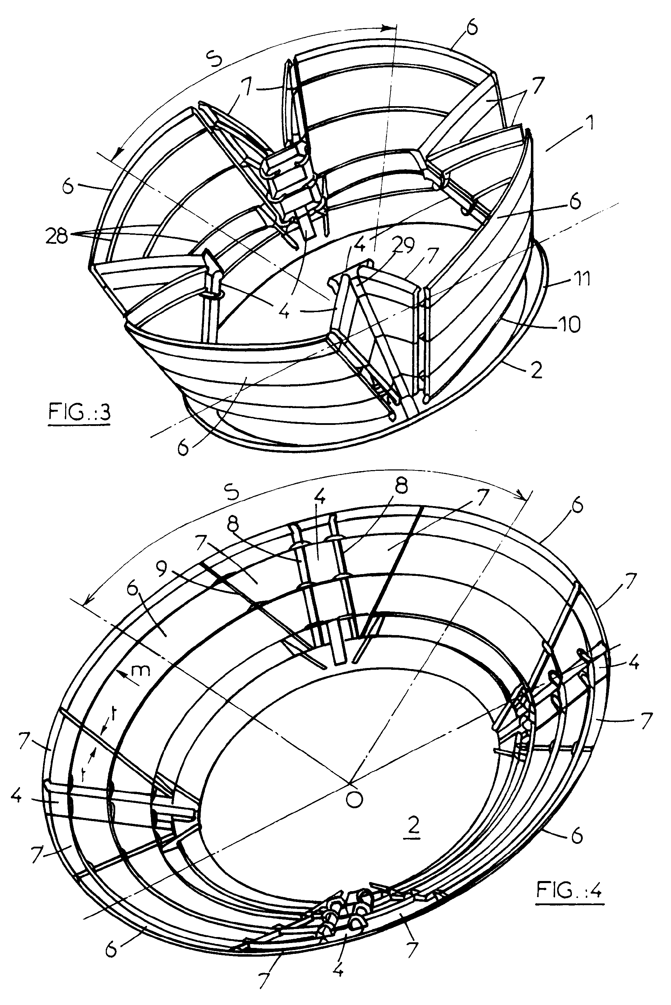

L'exemple théorique représenté aux figures 1 et 2 montre un dispositif composé de six secteurs S égaux, alors que l'exemple de réalisation pratique illustré aux figures 3 à 8 concerne un dispositif composé de quatre secteurs S égaux disposés à 90° par rapport au centre du support 2. Le nombre de secteurs peut varier en fonction des circonstances.

Selon les figures 1 et 2, la surface aérodynamique du dispositif déployé est assimilée à une surface plane en forme de couronne, comprise entre un cercle intérieur de rayon R1 et un cercle extérieur de rayon R2. A l'état replié, le dispositif se trouve à l'intérieur d'un volume à peu près en forme de tronc de cône, dont la base la plus grande a un rayon R3 bien inférieur au rayon R2 du cercle extérieur, et dont La hauteur H est voisine de la différence R2-R1.

Chaque secteur S (d'angle au sommet 60° dans ce cas) est constitué d'éléments reliés au support 2 par des articulations situées dans le plan de ce dernier pour former dans ce plan un polygone N de centre O. Dans l'exemple des figures 1 et 2, le polygone N est un dodécagone régulier formé alternativement de petits côtés et de grands côtés respectivement de mêmes longueurs. Bien entendu, il s'agit d'un octogone dans le cas du dispositif des figures 3 à 8.

Les éléments de chaque secteur S sont constitués par un premier panneau rigide, ou bras 4, central, de conformation sensiblement rectangulaire, relié sur le support 2 par une articulation 5 dont l'axe fixe BB' constitue un des petits côtés précités du polygone dodécagonal N. Des seconds panneaux 6 également sensiblement rectangulaires sont intercalés en nombre égal entre lesdits premiers panneaux 4 de chaque secteur S et sont reliés au support par des articulations 5A dont les axes fixes AB, A'B' constituent deux des grands côtés du polygone dodécagonal N, adjacents au petit côté BB'.

Les seconds panneaux 6, dits panneaux principaux car de dimensions plus importantes, sont reliés à chaque bras adjacent 4 par l'intermédiaire d'un panneau de liaison 7 de forme triangulaire, dont le sommet de l'angle plus aigu se confond avec l'extrémité B ou B' de l'axe BB' situé sur le dodécagone. Chaque panneau de liaison 7 est articulé d'une part à un bras 4 par un axe d'articulation mobile 8 perpendiculaire à l'axe d'articulation fixe BB' reliant ledit premier panneau 4 au support 2 et il porte une autre articulation mobile 9 perpendiculaire à l'axe fixe AB ou A'B' autour duquel pivote chaque panneau principal 6.

Il est à noter que chacun des éléments 4, 6, 7 ainsi constitués est indéformable en soi et la liaison des uns par rapport aux autres permet d'obtenir une structure en anneau fermé résistant aussi bien aux efforts tangentiels "t" qu'aux efforts méridiens ou radiaux "m".

A noter que les axes des articulations 8 et 9 sont concourants au point B ou B' d'intersection des axes BB' et AB ou A'B'; que les axes AB et A'B' sont respectivement normaux aux plans P et P' qui limitent le secteur S; et enfin que les axes AB, BB' et B'A' sont coplanaires.

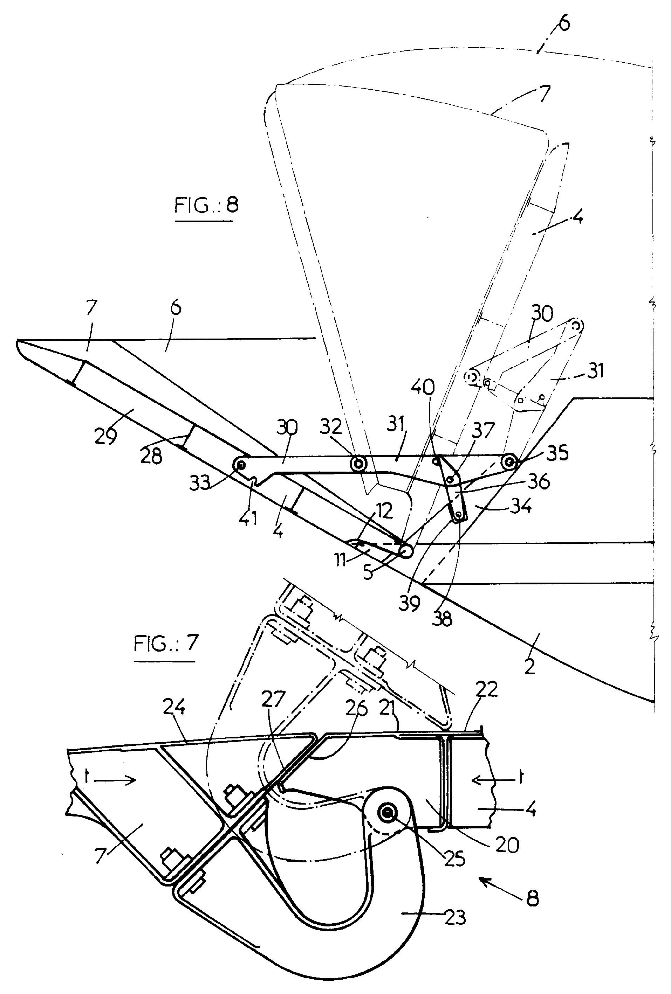

A noter également que le rayon de courbure de la base inférieure 10 des panneaux principaux 6 ou des bras 4 est tel qu'il peut s'adapter au profil circulaire d'une collerette 11 issue du support 2 (figures 3 et 8) lors du déploiement desdits panneaux 6. Afin de parfaire ce contact et procurer une surface de bonne qualité aérodynamique, un congé 12 du panneau 6 est apte à coiffer un bord arrondi de ladite collerette 11 du support 2 (figure 8).

Selon une cinématique illustrée à la figure 2, la rotation du bras 4 autour de l'axe fixe BB' entraîne les panneaux de liaison 7 par l'intermédiaire des articulations mobiles 8.

D'autre part, les panneaux de liaison 7 également articulés aux éléments 6 par les axes mobiles 9 entraînent ces derniers en rotation autour des axes fixes AB et A'B'.

La figure 2 montre que le pivotaient total d'un bras est de l'ordre de 120°, alors que celui d'un panneau principal n'est que de 80°.

Les rotations conjuguées des articulations 8 autour de BB' et des articulations 9 respectivement autour de AB et A'B' animent les panneaux de liaison 7 d'un mouvement tournoyant autour des points B ou B'.

Le repliage ainsi effectué permet le stockage du secteur S à l'intérieur d'un volume de base cylindrique de rayon maximal R3 (ou éventuellement R1).

Pour des raisons de simplicité, les figures 1 et 2 représentent un système formé de panneaux plans et d'un support circulaire, le dispositif étant plan dans la position déployée. Dans la pratique, on préfère des panneaux incurvées, comme cela est montré aux figures 3 à 5. Ces figures montrent également un dispositif qui, en position déployée, a une forme tronconique, et non plane. Le support, de son côté, n'a pas obligatoirement une forme circulaire.

Les figures montrent, en outre, que les bras sont de dimensions plus petites que les panneaux principaux. Cela n'est pas indispensable au fonctionnement. Le choix, dans la pratique, découle de deux genres de considérations qu'on va exposer.

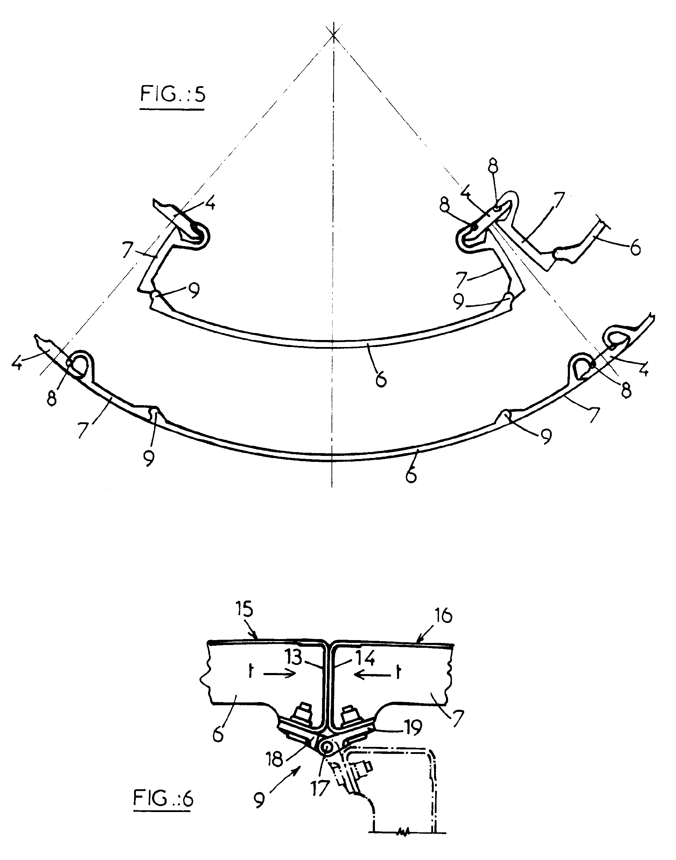

L'équilibre général d'une forme de révolution soumise à une pression uniforme se traduit par des efforts tangentiels "t" ( ou circonférentiels ) et des efforts méridiens "m" ( ou radiaux ). Dans le cas d'un tronc de cône lié sur sa petite base et soumis à une pression extérieure parallèle à l'axe et dirigée de la petite base vers la grande ( voir figure 4 ), la structure sera comprimée par des efforts tangentiels "t" et tendue par les efforts méridiens "m".

Pour obtenir un "bouclage" des forces de compression sans efforts exagérés sur les pivots des articulations 8, 9, il est préférable que des surfaces d'appui prévues sur les bords qui se font face des panneaux voisins 4, 6, 7 soient disposées pour transmettre d'un panneau à l'autre, au moins en partie, les forces de compression résultant d'une pression dynamique à peu près uniforme.

Il y a avantage à ce que le système soit autostable, c'est-à-dire que les efforts résultant de la pression tendent à provoquer sur l'ensemble des déplacements des divers éléments qui soient en sens inverse des déplacements qui correspondent au repliage. Ce résultat est obtenu principalement en prévoyant que les panneaux principaux sont plus grands que les bras, si bien qu'ils subissent une poussée qui tendrait à les faire passer en arrière-plan des bras, c'et-à-dire plus près de l'axe OZ, alors que le mouvement de repliage autorisé les oblige à être constamment en avant de ce même plan (voir figure 5).

D'un autre côté, après étude de systèmes où les premier et second panneaux étaient de mêmes dimensions, on a établi qu'on réduisait l'encombrement en position repliée, pour un même volume libre à l'intérieur du dispositif en prévoyant que les premiers panneaux, ou bras, sont de dimensions nettement plus petites que les seconds panneaux ou panneaux principaux. Bien entendu, dans des cas très spéciaux, la forme des appareillages embarqués peut obliger à s'écarter de cette règle.

Ainsi, les considérations de stabilité et d'encombrement aboutissent en général à la même conclusion.

La commande active en rotation d'un seul bras 4 suffit au déploiement du système complet par entraînement mutuel des éléments. Par conséquent, une commande active conjuguée des éléments 4 permet de fiabiliser le système. Il est possible de commander le déploiement, le reploiement ou les deux.

Quant à l'équilibre statique du dispositif complet replié, il est obtenu de la manière suivante :

Les bras 4 ont trois côtés articulés plus un libre,

Les panneaux principaux 6 ont trois côtés articulés plus un libre,

Les panneaux de liaison 7 ont deux côtés articulés plus un libre.

Le verrouillage en rotation des bras, (et même d'un seul bras), autour des axes fixes BB' suffit donc à stabiliser le système complet dans une position déterminée.

Il serait possible, en théorie au moins, de supprimer l'articulation reliant directement un panneau principal au support. Dans la pratique, celle-ci est obligatoire pour des raisons de fiabilité, et d'équilibre des efforts appliqués.

La figure 6 montre la structure d'une articulation 9 entre un panneau principal 6 et un panneau de liaison 7. Les bords en regard des panneaux 6 et 7 comportent chacun une surface d'appui 13, 14 perpendiculaire à la surface extérieure 15, 16 du panneau correspondant, qui est soumis à la pression aérodynamique. Dans la position de déploiement représentée en trait plein, les surfaces d'appui 13, 14 sont en contact l'une avec l'autre. La référence 17 désigne le pivot de la charnière 8, portée par des ferrures 18, 19 montées sur les panneaux 6 et 7. L'axe du pivot 17 est dans le plan des surfaces d'appui 13, 14, et ce pivot est écarté de la surface extérieure 15, 16. On conçoit que les efforts de compression "t" sont transmis directement d'un panneau à l'autre, tendant à maintenir la charnière en position de déploiement. La surface extérieure de l'ensemble est lisse, le pivot 17 n'est pratiquement pas sollicité.

La figure 7 montre la structure d'une articulation 8 entre un bras 4 et un panneau de liaison 7. Le bras 4 porte une ferrure 20 dont la surface extérieure 21 prolonge la surface extérieure 22 du bras 4. Le panneau de liaison 7 porte une ferrure 23 en col de cygne, située entièrement à l'intérieur par rapport à la surface extérieure 24 du panneau 7. Les deux ferrures 20, 23 sont reliées par un pivot d'articulation 25. La ferrure 20 et l'extrémité du panneau 7 présentent chacune une surface d'appui 26, 27, à peu près à 45° sur les surfaces extérieures 21, 24, et ces surfaces d'appui sont en contact l'un avec l'autre quand l'ensemble est en position déployée, en trait plein sur la figure. Le pivot 25 est situé sur une perpendiculalire aux surfaces d'appui, passant à peu près par leur intersection avec la surface extérieure correspondante 21, 24.

La figure 8 montre à petite échelle une articulation 5 reliant le bras 4 au support 2. Cette articulation, de type classique, n'appelle pas de remarque, si ce n'est qu'elle est associée à une collerette 11 du support. Celle-ci, en position de déploiement, est en contact avec un congé 12 du bras, pour constituer une surface extérieure sans discontinuité nuisible aux qualités aérodynamiques. La coupe de la figure 8 s'applique également aux articulations 5A liant les panneaux principaux 6. Ces articulations comprennent deux pivots situés chacun à proximité d'un angle du panneau, et qui, en fait, sont portés par la même ferrure du support que l'articulation 5.

Les articulations à rotation interne, 5, 5A et 8 sont réalisées par des charnières ou des paliers permettant un débattement limité tant à l'ouverture qu'à la fermeture, alors que les articulations à rotation externe 9 (figure 5), qui constituent un angle rentrant, sont réalisées par des paliers dits à "col de cygne" permettant de grands débattements angulaires. La capacité de rotation de ces articulations est un paramètre déterminant pour la définition du système. (Une rotation de 75° peut être considérée comme valeur de base).

Les articulations sont en butée mécanique en fin de course position déployée, ceci permet d'assurer la qualité géométrique de l'ensemble, son équilibre et sa stabilité.

La structure de la liaison de l'articulation 9, avec ses surfaces 13, 14 fait que, lorsque l'ensemble déployé est soumis à une pression dynamique, les panneaux de liaison se comportent comme s'ils étaient solidaires des panneaux principaux. La stabilité est acquise dès lors que l'aire de la surface extérieure d'un bras est inférieure à la demi-somme des aires des surfaces extérieures du panneau de liaison et des panneaux principaux adjacents, car la force dirigée vers l'axe qui s'exerce sur l'ensemble formé par les panneaux de liaison et les panneaux principaux est supérieure à celle qui s'exerce sur le bras, et va à l'encontre du mouvement autorisé par les articulations pour le repliage.

Dans l'exemple pratique décrit, on préfère cependant, par sécurité, prévoir un verrouillage dans la position déployée et aussi dans la position repliée pour s'opposer à des phénomènes vibratoires, par exemple au moment du lancement d'une fusée.

La figure 8 montre comment est obtenu ce verrouillage. Un bras 4 est articulé en 5 sur le support 2. Deux tringles 30, 31 sont reliées entre elles par une articulation 32, et une des tringles 30 est reliée au bras 4 par une articulation 33, alors que l'autre tringle 31 est reliée à une ferrure 34 solidaire du support 2 par une articulation 35. Les articulations 32, 33 et 35 sont parallèles à l'articulation 5. En position de déploiement, représentée en trait plein sur la figure 8, les articulations 32, 33 et 35 sont alignées, ce qui réalise le blocage et permet la transmission des efforts entre le support 2 et l'ensemble des panneaux.

Une tige de verrouillage 36 est reliée à la tringlerie 31 par une articulation 37 parallèle à l'articulation 35. Elle porte, à une extrémité, un doigt de verrouillage 38, poussé par un ressort non représenté, et qui dans la position de déploiement, pénètre dans une encoche 39 de la ferrure 34. L'autre extrémité de la tige 36 est retenue par une butée 40 portée par la tringle 31, ce qui empêche le doigt 38 de sortir de l'encoche de la ferrure 34 et assure le verrouillage en position de déploiement. En position de repli, en trait mixte sur la figure 6, le doigt 38 pénètre dans une encoche 41 de la tringle 30, ce qui assure le verrouillage dans cette position.

Des liaisons par câbles, non représentées, assurent les déplacements des tringles 30, 31.

Dans le cas d'ensembles animés d'un mouvement de rotation autour de l'axe de génération, les efforts d'inertie ont une tendance naturelle à provoquer le déploiement. On peut dans ce cas particulier ne pas utiliser d'actionnement pour le déplacement, un système de verrouillage est cependant alors nécessaire en général.

Un raidissage circonférentiel par des nervures 28 permet le rebouclage des efforts tangentiels, il doit prendre en compte les effets d'instabilité en flambage dus aux efforts de compression.

Une nervure radiale 29 associée aux paliers d'articulation 5 (ou 5A) permet de collecter et d'équilibrer les efforts tangentiels.

Les pièces d'articulation sont placées à la croisée de nervures circonférentielles et radiales.

La surface externe des panneaux peut être constituée d'une structure mince, telle que tôle ou toile tendue, celle-ci doit satisfaire les conditions de flambage ou post-flambage en compression (sens tangentiel) admissibles permettant à la structure de conserver son intégrité sans altérer de façon notable les qualités géométriques de la surface aérodynamique.

Les dimensions maxima de tels systèmes étant souvent liées à la faisabilité dimensionnelle des éléments constitutifs, il est possible d'étendre le domaine d'application.

Ces différentes particularités de l'invention permettent des mouvements relatifs des éléments liés, limités à des rotations simples autour d'axes linéaires. Les mouvements de rotulage, les déplacements linéaires ou complexes sont évités.

On notera enfin que le principe de l'invention est utilisable au cas où la pression dynamique est appliquée en sens inverse, c'est-à-dire sur la face concave de l'ensemble des panneaux. Les contraintes de compression deviennent alors des contraintes de traction et inversement. Ce sont donc les articulations 5, 5A reliant les panneaux au support qui devront être aptes à transmettre des efforts de compression.

## Revendications

1. Dispositif déployable comprenant un support (2) et des éléments (4, 6) capables de pivoter sous l'action d'un système d'actionnement commun autour d'axes fixes par rapport à ce support, ces axes constituant un polygone convexe plan (N), et les éléments étant capables de pivoter ensemble autour desdits axes pour faire passer le dispositif d'une disposition de pliage, où les éléments font un premier angle avec ledit plan, à une disposition de déploiement, où les éléments font avec ledit plan un second angle plus faible que le premier et constituent ensemble une surface à peu près continue,
caractérisé en ce que lesdits éléments comprennent des premiers panneaux ou bras rigides (4), liés chacun au support de façon à pouvoir pivoter d'un premier angle autour d'un premier axe (BB') qui constitue un premier côté dudit polygone, et des seconds panneaux ou panneaux principaux, rigides, (6), en nombre égal aux premiers panneaux et intercalés entre eux, montés chacun de façon à pouvoir pivoter d'un second angle plus petit que le premier, autour d'un second axe (AB, A'B') qui constitue un second côté dudit polygone, et en ce que des panneaux de liaison, rigides, (7), sont placés chacun entre un premier et un second panneau et reliés à ce premier panneau par une articulation (8) d'axe perpendiculaire audit premier axe (BB'), et à ce second panneau (7) par une articulation (9) d'axe perpendiculaire audit second axe (AB, A'B').

2. Dispositif selon la revendication 1, caractérisé en ce que des surfaces d'appui (13, 14, 26, 27) prévues sur les bords qui se font face des panneaux voisins (4, 7; 7, 6) sont disposées pour transmettre d'un panneau à l'autre, au moins en partie, les forces de compression résultant d'une pression dynamique à peu près uniforme.

3. Dispositif selon la revendication 2, caractérisé en ce que les surfaces d'appui (13,14) entre panneaux principaux (6) et panneaux de liaison (7) sont perpendiculaires à leur surface extérieure, et en ce que l'aire d'un bras (4) est inférieure à la demi-somme des aires des deux panneaux de liaison et des deux panneaux principaux adjacents.

4. Dispositif selon l'une des revendications 1 à 3, caractérisé en ce que les premiers panneaux, ou bras (4), sont de dimensions nettement plus petites que les seconds panneaux ou panneaux principaux (6).

5. Dispositif selon la revendication 4, caractérisé en ce que le système d'actionnement destiné à déplacer les panneaux entre la position de pliage et la position de déploiement comprend des moyens de verrouillage de ces panneaux dans cette dernière position.

6. Dispositif selon la revendication 4 ou 5, caractérisé en ce que le système d'actionnement comprend aussi des moyens de verrouillage des panneaux en position de pliage.

7. Dispositif selon l'une des revendications 1 à 6, caractérisé en ce que les articulations entre panneaux qui constituent un angle rentrant dans la position de pliage sont reliées à l'un des panneaux par une partie en forme de col de cygne.

8. Dispositif selon l'une des revendications 1 à 7, caractérisé en ce que chaque panneau est d'une structure mince renforcée par des nervures et/ou des membrures (28, 29), les pièces d'articulation (17, 18, 19; 20, 23, 25) étant placées à la croisée de certaines de ces nervures ou membrures.

9. Dispositif selon l'une des revendications 1 à 8, caractérisé en ce que le support est pourvu d'une surface rigide qui prolonge sans discontinuité la surface constituée par les panneaux quand ceux-ci sont déployés.

10. Dispositif selon l'une des revendications 1 à 9, caractérisé en ce qu'il est conçu pour le freinage aérodynamique et la protection thermique d'un appareillage satellisé récupérable lors de son entrée dans l'atmosphère.

## Patentansprüche

1. Entfaltbare Vorrichtung, die einen Träger (2) und Elemente (4, 6) aufweist, die in der Lage sind, unter der Aktion eines gemeinsamen Betätigungssystems um feste Achsen bezüglich dieses Trägers zu schwenken, wobei diese Achsen ein konvexes Polygon in einer Ebene (N) bilden, und die Elemente fähig sind, gemeinsam um diese Achsen zu schwenken, um die Vorrichtung von einer Faltposition, in der die Elemente einen ersten Winkel mit der Ebene bilden, in eine Entfaltungsposition gelangen zu lassen, in der die Elemente mit der Ebene einen zweiten Winkel einschließen, der geringer als der erste ist und gemeinsam eine beinahe kontinuierliche Oberfläche bilden,
dadurch gekennzeichnet, daß die Elemente erste starre Tafeln oder Arme (4) aufweisen, die jeder mit dem Träger auf eine Weise verbunden sind, daß sie um einen ersten Winkel um eine erste Achse (BB') schwenken können, die eine erste Seite des Polygons bildet, und zweite starre Tafeln oder Haupttafeln(6) in gleicher Anzahl wie die ersten Tafeln und zwischen diesen eingeschoben aufweist, die jeder auf eine Weise montiert sind, daß sie um einen zweiten Winkel, der kleiner als der erste ist, um eine zweite Achse (AB, A'B') schwenken können, die eine zweite Seite des Polygons bildet, und daß starre Verbindungstafeln (7) jede zwischen einer ersten und einer zweiten Tafel plaziert sind und mit der ersten Tafel durch ein Gelenk (8) mit einer Achse senkrecht zu der ersten Achse (BB') und mit der zweiten Tafel (7) durch ein Gelenk (9) mit einer Achse senkrecht zu der zweiten Achse (AB, A'B') verbunden sind.

2. Vorrichtung gemäß Anspruch 1, dadurch gekennzeichnet, daß auf den Rändern, die den benachbarten Tafeln (4, 7; 7, 6) gegenüberliegen, vorgesehene Stützflächen (13, 14, 26, 27) angeordnet sind, um von einer Tafel zur anderen, zumindest teilweise, Druckkräfte zu übertragen, die aus einem ungefähr gleichförmigen dynamischen Druck resultieren.

3. Vorrichtung gemäß Anspruch 2, dadurch gekennzeichnet, daß die Stützflächen (13, 14) zwischen Haupttafeln (6) und Verbindungstafeln (7) senkrecht zu ihrer äußeren Oberfläche sind und der Flächeninhalt eines Armes (4) geringer als die halbe Summe der Flächeninhalte der beiden Verbindungstafeln und der beiden benachbarten Haupttafeln sind.

4. Vorrichtung gemäß einem der Ansprüche 1 bis 3, dadurch gekennzeichnet, daß die ersten Tafeln oder Arme (4) Dimensionen haben, die bedeutend geringer als die zweiten Tafeln oder Haupttafeln (6) sind.

5. Vorrichtung gemäß Anspruch 4, dadurch gekennzeichnet, daß das Betätigungssystem, welches dazu bestimmt ist, die Tafeln zwischen einer Faltposition und der Entfaltungspsotion zu verschieben, Mittel zur Verriegelung dieser Tafeln in dieser letzten Position aufweist.

6. Vorrichtung gemäß Anspruch 4 oder 5, dadurch gekennzeichnet, daß das Betätigungssystem auch Mittel zur Verriegeln der Tafeln in einer Faltposition aufweist.

7. Vorrichtung gemäß einem der Ansprüche 1 bis 6, dadurch gekennzeichnet, daß die Gelenke zwischen den Tafeln, die einen rückspringenden Winkel in der Faltposition bilden, mit einer der Tafeln durch ein Teil in Form eines Schwanenhalses verbunden sind.

8. Vorrichtung gemäß einem der Ansprüche 1 bis 7, dadurch gekennzeichnet, daß jede Tafel eine dünne Struktur hat, die durch Rippen und/oder Gurtungen (28, 29) verstärkt ist, wobei die Gelenkstücke (17, 18, 19; 20, 23, 25) an den Kreuzungspunkten von bestimmten dieser Rippen oder Gurtungen angeordnet sind.

9. Vorrichtung gemäß einem der Ansprüche 1 bis 8, dadurch gekennzeichnet, daß der Träger mit einer starren Oberfläche versehen ist, die ohne eine Diskontinuität die Oberfläche verlängert, welche von den Tafeln gebildet ist, wenn sie entfaltet sind.

10. Vorrichtung gemäß einem der Ansprüche 1 bis 9, dadurch gekennzeichnet, daß sie für das aerodynamische Bremsen und den thermischen Schutz einer Satellitenapparatur gedacht ist, die im Verlauf ihres Eintritts in die Atmosphäre zurückgewonnen werden kann.

## Claims

1. Deployable device comprising a support (2) and elements (4,6) capable of pivoting about axes fixed relative to this support under the action of a common actuating system, these axes constituting a convex polygon (N) within a plane, and the elements being capable of pivoting together about the said axes in order to move the device from a folded-up arrangement in which the elements form a first angle with the said plane, to a deployed arrangement in which the elements form, with the said plane, a second angle smaller than the first and together constitute an approximately continuous surface, characterized in that the said elements comprise first rigid panels, or arms, (4), each linked to the support so as to be able to pivot by a first angle about a first axis (BB') which constitutes a first side of the said polygon, and second rigid panels, or main panels (6), in a number equal to the first panels and inserted between them, each linked to the support so as to be able to pivot by a second angle, smaller than the first, about a second axis (AB, A'B') which constitutes a second side of the said polygon, and in that rigid linking panels (7) are each placed between a first and a second panel and are connected to this first panel by an articulation (8) with an axis perpendicular to the first axis (BB'), and to this second panel (7) by an articulation (9) with an axis perpendicular to the second axis (AB, A'B').

2. Device according to claim 1, characterized in that bearing surfaces (13, 14, 26, 27) provided on the mutually facing edges of the adjacent panels (4,7;7,6) are arranged so as to transmit from one panel to another at least part of the compressive forces resulting from an approximately uniform dynamic pressure.

3. Device according to Claim 2, characterized in that the bearing surfaces (13, 14) between main panels (6) and linking panels (7) are perpendicular to their outer surface, and in that the area of an arm (4) is less than half the sum of the areas of the two linking panels and of the two adjacent main panels.

4. Device according to anyone of Claims 1 to 3, in which the first panels, or arms (4), have dimensions which are considerably smaller than the second panels or main panels (6).

5. Device according to Claim 4, characterized in that the said actuating system intended to displace the panels between the folded-up position and the deployed position comprises means for locking these panels in this latter position.

6. Device according to Claim 4 or 5, characterized in that the actuating system also comprises means for locking the panels in the folded-up position.

7. Device according to anyone of Claims 1 to 6, characterized in that the articulations between panels which constitute a re-entrant angle in the folded-up position are connected to one of the panels by a part in the shape of a swanneck.

8. Device according to anyone of Claims 1 to 7, characterized in that each panel has a thin structure reinforced by ribs and/or braces (28,29), the articulation pieces (17, 18, 19 ; 20, 23, 25) being placed at the intersection of some of these ribs or braces.

9. Device according to anyone of Claims 1 to 8, characterized in that the support is provided with a rigid surface which extends without any discontinuity the surface constituted by the panels when the latter are deployed.

10. Device according to anyone of Claims 1 to 9, characterized in that it is specially designed for the aerodynamic deceleration and the thermal protection of recoverable piece of equipment in satellite orbit upon its entry into the atmosphere.
